Europäisches Patentamt

European Patent Office

Office européen des brevets

(19)

(11) Publication number: **0 081 631**
**B1**

(12) **EUROPEAN PATENT SPECIFICATION**

(45) Date of publication of patent specification: **27.08.86**

(51) Int. Cl.⁴: **B 65 H 23/04,** G 11 B 15/56

(21) Application number: **82108071.0**

(22) Date of filing: **02.09.82**

(54) **Reel-to-reel web handling apparatus.**

(30) Priority: **18.12.81 US 332261**

(43) Date of publication of application:
**22.06.83 Bulletin 83/25**

(45) Publication of the grant of the patent:
**27.08.86 Bulletin 86/35**

(84) Designated Contracting States:
**DE FR GB**

(56) References cited:
DE-A-1 808 808
DE-A-2 348 267
US-A-3 074 661
US-A-3 297 221

IBM TECHNICAL DISCLOSURE BULLETIN, vol.
17, no. 9, February 1975, page 2564, New York,
US, D. JANSSEN et al.: "Tape tension
redistribution"

(73) Proprietor: **International Business Machines
Corporation
Old Orchard Road
Armonk, N.Y. 10504 (US)**

(72) Inventor: **Bullock, Joseph George
7800 East Calle Rosa
Tucson Arizona 85715 (US)**
Inventor: **Rueger, William John
7233 East Marigold Circle
Tucson Arizona 85730 (US)**

(74) Representative: **Petersen, Richard Courtenay
et al
IBM Svenska AB Patent Operations Box 962
S-181 09 Lidingö (SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to reel-to-reel web handling apparatus.

Webs in the form of magnetically-coated tapes have been used for several years for recording digital data received from data processing equipments of all types. Additionally, such webs have been used for audio and video applications as well. For data processing applications, it is desirable that access to data recording areas on the web occur rapidly. To this end, so-called vacuum columns, such as disclosed in GB—A—733,807, US—A—3,057,568 and US—A—3,057,569, may be employed to provide a buffer between web or tape-containing reels and a transducer or work station. The arrangement is such that a capstan rapidly accelerates the web to provide the rapid access with the vacuum columns providing a low inertial length of web for permitting rapid acceleration and the resulting rapid access. The vacuum columns decouple the work station from the reel of tape such that a relatively short length of the web can be accelerated while the reel is being rotationally accelerated. In this arrangement, the bight of the web formed in the vacuum column varies in length as the reel inertia is compensated for. Typically, during stop-start motions of such a web handler, the length of the bight in the vacuum column varies dramatically. An improvement over those vacuum columns is disclosed in GB—A—847,821 and US—A—3,112,473, in which the walls of the vacuum columns are tapered so that as the bight becomes longer it also becomes narrower which decreases the pull of the web. They also teach that a plurality of vacuum columns interposed between a work station and a web-containing reel provides certain advantages in mechanically buffering the reel from the work station. DE—A—1 808 808 for which the precharacterising portion of Claim 1 is based) discloses an automatic web buffering means having tapered vacuum columns provided with slots located centrally along the back walls of the columns. Each slot is enclosed and is connected to a vacuum port. When the loop moves downwardly in a column a greater portion of the slot is uncovered to atmospheric pressure above the loop to bleed air into the vacuum column, thereby weakening the vacuum under the loop to further decrease the force on the loop as the loop moves downwardly in the column. A later tapered column is disclosed in US—A—4,189,113. Other forms of secondary buffers are shown by US—A—3,202,373 and US—A—3,176,894. All these improvements were directed towards improving access to data areas on the web by using a vacuum column as a web buffer storage.

Various designs of web vacuum buffer storage apparatus have been employed not only to provide buffer storage, but also to control the bight in the buffer storage, as well as performing auxiliary web-controlling functions. GB—A—12777111 and US—A—3,645,470 show an air passageway extending between two side-by-side vacuum columns to serve as a clamp such that when a web is loaded into the vacuum columns it will load into both columns. The clamp limits the slip of the web over a capstan so that the web enters both vacuum columns. This control limits the transport of the web between adjacent vacuum columns during the loading process. In this arrangement, a work station or transducer station is integral to one of the vacuum columns. US—A—3,986,651 shows a symmetrical web transport arrangement in which concave vacuum assisted guides are used to guide the web past a work or transducer station with vacuum columns stabilizing the flow of tape, i.e. decoupling the capstan from the web-containing reels. US—A—3,281,040, also shows a vacuum assisted guide in which slots along the guides permit air flow for controlling the web within the vacuum chamber guide. US—A—4,218,026 shows a vacuum arrangement with an adjustable side, ostensibly for taking various widths of webs. US—A—3,266,691 shows a series of tapered vacuum loop boxes for preventing breakage of the web during rapid acceleration-deceleration.

IBM Technical Disclosure Bulletin, February 9, 1975, on page 2567 in an article entitled "Contour Vacuum Column", shows a flexible shim and a shaped side wall of a vacuum column for accommodating slewing of the web during transport to provide guiding of the web towards a work station. Tape tension control is disclosed in IBM Technical Disclosure Bulletin, February, 1975, page 2564, in which a so-called soft vacuum pocket redistributes tension uniformly across the tape. The soft vacuum pocket is bracketed in the tape path by a pair of air bearings.

The tape tension redistribution device eliminates non-uniform stresses or tensions in the tape, which, among other things, accommodates skewing caused by misaligned reels. Such skewing appears in the tape as a curvature between the two misaligned reels.

In a high performance reel-to-reel web transport, such as used in a reel-to-reel magnetic tape recorder, uniform tension is applied to the web during rapid acceleration-deceleration. Standing waves can be induced into the web such that there are differing tape tensions along the tape path between the reels. Further, as the wrap of the web on either of the reels varies, the angle of approach from the reel to the web transport path changes. This change in angulation can affect the length of web disposed between the reel and a work station and disposed between the two reels in the reel-to-reel transport. Further, the web may have a lateral curvature induced from being stored on a reel. All of these factors should be accommodated before the web is transported past the work station while maintaining the length of the web between a reel and a work station to be substantially constant. While the vacuum column buffers of the prior art provide for good mechanical buffering, such buffers require substantial space and are costly. Therefore, it is desirable to eliminate the vacuum buffers while still maintaining good control over the web during acceleration and deceleration. When a web, such as a magnetically coated plastic substrate recording tape, is stored on a reel, such storage may result in certain undesirable shape changes (tape may curl laterally). For reliable magnetic transducing operations, such changes should be accommodated within a short distance of the supply reel, whilst minimizing tape transport length for a reduced cost recorder.

It is thus an object of the present invention to provide a web controller which is interposable between a pair of web-containing reels and a work station for providing an enhanced web handling device. It is a further object to provide and enhance web-handling devices of the reel-to-reel type to accommodate various perturbations in the web being transported and in web transport characteristics.

According to the invention, the reel-to-reel web handling apparatus has tension control means tending to maintain uniform tension in a web extending and transportable between two reels, means to change the speed of web transport between reels which may introduce perturbations in the tension, a work station disposed between the two reels, at which work is performable on the web, web bight forming means disposed between the work station and one of the reels for receiving the web to form a bight therein and bight regulation means in the bight forming means to maintain a relatively constant bight during web stoppage and motions irrespective of modest tension changes, said bight forming means having an air evacuated chamber including a pair of spaced and facing sidewalls having a spacing substantially equal to the width of said web whereby as said web enters said chamber a substantial air sealing relationship is established, said bight regulation means being in said chamber and including an elongated slot in one of said sidewalls. The invention is characterized in that said slot extends in the direction of web motion and has a shoulder adjacent the outer portion of the chamber extending in the direction of web motion and crosswise of the bight of web for allowing air to flow past said web through said slot into said chamber so that the bight of said web in said chamber tends to stabilize adjacent said upper shoulder whereby the length of the web between said work station and said one reel is relatively constant.

The scope of the invention is defined by the appended claims; and how it can be carried into effect is hereinafter particularly described with reference to the accompanying drawings, which:

FIGURE 1 is a diagrammatic plan view of a reel-to-reel tape recorder hving a web handler in accordance with the present invention;

FIGURE 2 is a side elevation of a web controller in accordance with the present invention used in the web handler shown in Figure 1;

FIGURE 3 is a plan view of the controller shown in Figure 2; and

FIGURE 4 is a sectional view, to an enlarged scale, on the line IV—IV of Figure 3.

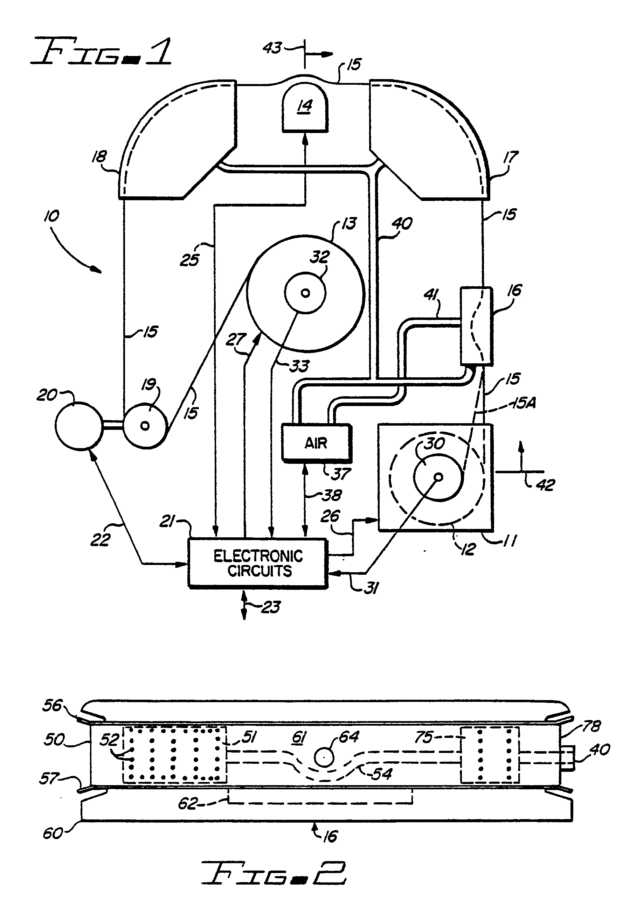

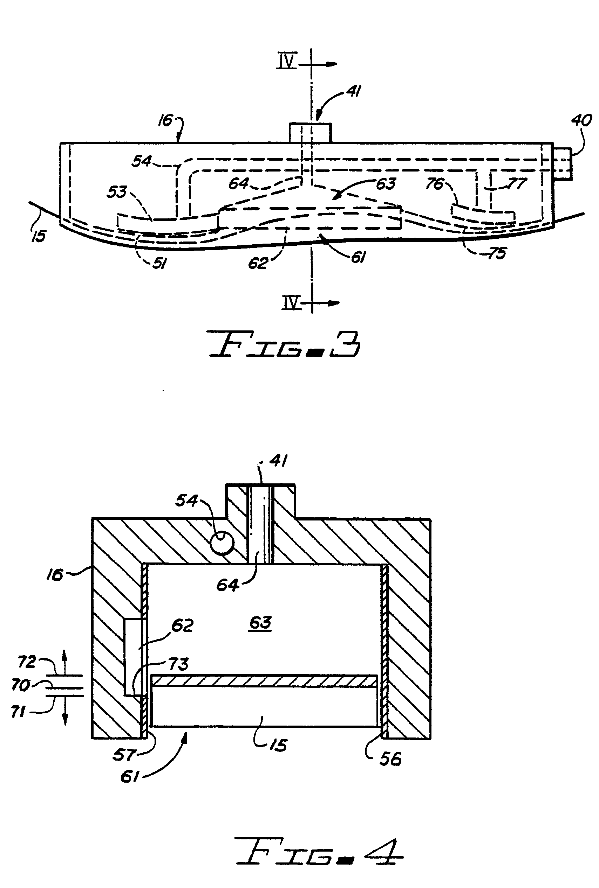

In a magnetic tape recorder 10 (Fig. 1) which embodies the present invention, a cartridge 11, containing a supply reel 12 of magnetically coated web 15, is replaceably installed at one corner. The free end of the web 15 is automatically transported by the recorder 10 over a transport path to a machine take-up reel 13. The web 15 is taken off reel 12 passed through a tape controller 16, which embodies the present invention and is later described with respect to Figures 2, 3 and 4. From the controller 16, the web 15 passes around an airbearing arcuate guide 17 to pass over a transducer or work station 14. Thence, the web 15 passes around a second airbearing arcuate guide 18, and around a tension idler wheel 19 to the machine reel 13. Direction of tape transport over the just described path is reversible. The tension idler wheel 19 is supported by a tension transducer 20 for indicating via an electrical connection 22 to electronic circuits 21 the sensed tension of web 15 as it is being transported or being held. Electronic circuits 21 respond to the tension indication supplied over connection 22 to control the rotation of reels 12 and 13 in a manner such that positive pressure is exerted by web 15 onto the web facing surface of the transducer at station 14 for ensuring a good so-called recording platform, i.e. ensures a good exchange of signals between the magnetic coating on web tape 15 and the transducer at station 14. Circuits 21 additionally are connected to a using unit (not shown) via a bus 23. The using unit supplies commands to electronic circuits 21 which include commands to move the web 15 between reels 12 and 13 as well as to transfer signals between the magnetic record area on web 15 and the using unit, by recording signals via bus 25 and transducer 14, or receive signals from transducer 14 via bis 25.

Electronic circuits 21 also include the usual servo-control circuits which control the speed of transport of the web 15. Associated with each of the reels 12 and 13 is a motor (not shown) controlled by electrical signals supplied by electronic circuits 21 over electrical connections 26 and 27, which co-ordinate the rotation of reels 12 and 13, respectively, using known reel-to-reel techniques. Tachometer wheels 30 and 32, on reels 12 and 13, respectively, provide rotational speed-indicating signals over lines 31 and 33, respectively, to electronic circuits 21 for implementing the servo control. Additionally, the signals from tachometer wheels 30, 32 indicate web displacement. In particular, tachometer wheel 30 is used by electronic circuits 21 to evaluate the amount of web 15 unwound from reel 12. Such displacement indication is used in combination with addresses recorded on web 15 for addressing record areas on web 15.

Electronic circuits 21 also control the operation of an air supply mechanism 37 via control lines 38. Air supply mechanism 37 supplies air under pressure through conduit 40 to arcuate air bearing guides 17 and 18 and to air bearings, described later, in web controller 16. Air supply mechanism 37 also exhausts air through conduit 41 from controller 16 to provide a so-called vacuum chamber used in connection with the regulation of web 15 as it is transported between reel 12 and transducer or work station 14. Air supply mechanism 37 provides a constant air flow through conduit 41 which results in a pulling force on web 15 greater than the tension provided to web 15 by the co-ordinated control of reels 12 and 13. Such greater force is used, as described later, to achieve the functions of the present invention. The air flow through conduit 40 is also at a constant pressure.

Because tachometer wheel 30 is used in connection with address positioning of web 15, the web length between reel 12 and transducer station 14, as represented by the lines 42 and 43, should remain substantially constant, to make the addressing predictable at transducer station 14. Such constant length of web should be determined independent of the inclinination of the tape as it leaves reel 12 as represented by the dashed line 15A when a small amount of web remains on reel 12. Controller 16 provides several regulating controls for maintaining a substantially constant length of web 15 as well as ensuring a relatively flat surface on web 15 as it passes transducer or work station 14.

Controller 16 (Fig. 2) receives web 15 from reel 12 at leading edge 50 of a web guiding portion. The web guiding portion has a convex web receiving surface beginning at leading edge 50 and including an air bearing area 51 having a plurality of air apertures 52 receiving air from plenum 53 (Fig. 3). Penum 53 is in fluid communication with air pressure conduit 40 via air passageway 54. The web guiding portion has a second convex web receiving surface spaced from the surface including the area 51, ending at trailing edge 78 and including an air bearing area 75 having a plurality of air apertures receiving air from plenum 76 which is in fluid communication with air pressure conduit 40 via air passageway 77. The convex surface including air bearing 51 has tape side guides 56 and 57 for guiding web 15 centrally over the air bearing area 51, which guides diverge slightly beyond the leading edge 50 and the trailing edge 78 of the web guiding portion.

The side guides 56 and 57 are mounted in a channel shaped structure 60. Between the convex web receiving surfaces, the web 15 extends across the open side of a vacuum chamber 63 which provides length regulation of tape 15, as will become apparent. The chamber 63 is connected by a passage 64 to the air exhaust conduit 41. With the web stretched flat between the air bearing areas 51 and 75, it lies in an outer portion 61 of the chamber 63 between the guides 56 and 57. The edges of the web are sufficiently close to the guides 56 and 57 to form an air seal so that air exhausted through conduit 41 and passage 64 from the chamber 63 provides a maximum force on the web. This overcomes the tension in the web 15, so that the web 15 is pulled through the outer portion 61 into the air exhaust chamber 63.

An elongated groove 62 is formed in a side wall of the channel shaped structure 60. The groove 62 communicates with the chamber 63 through an elongated slot in the guide 57. The grove and slot have a shoulder 73 adjacent the outer portion 61, which shoulder extends transverse to the guide 57 to provide a sharp increase in the width of the chamber 63. As the web 15 enters the chamber 63, the groove 62 breaks the air seal to allow air flow past the web 15 from the outer portion 61 through air exhaust chamber 63, and passage 64 to the air exhaust conduit 41. Such air flow regulates the web to a position of equilibrium with the tension on web 15 provided through the control of reels 12 and 13 by electronic circuits 21.

The web is drawn into an approximate catenary between the areas 51 and 75 and the central portion of relatively shallow bight so formed has a nominal web position 70 which occurs during constant-speed web transport or when web 15 is stationary. During acceleration and deceleration phases of web transport, the uniform tension exerted on web 15 is subject to perturbations which are accommodated by controller 16 to keep a constant length of web between supply reel 12 and transducer 14. When the tension increases, then the bight in the web 15 within air exhaust chamber 63 tends to shorten up to an outer limit position 71 to accommodate increasing tension. The upper limit position 71 is determined by the shoulder 73 of the groove 62. At shoulder 73, the air pull on web 15 exceeds the web tension preventing further shortening of the bight. At this point, reel 12 will rotate to allow more web 15 to keep the web length as represented by lines 42 and 43 substantially constant by accommodating variations in web tension. when tension on web 15 is reduced, then the bight in air exhaust chambers 63 tends to increase up to an inner level position 72 to accommodate the reduced web tension. As the web 15 moves across the groove 62 due to decrease tension on web 15, more air is allowed to bypass web 15, reducing the bight forming force induced by air exhausted through conduit 64.

When the web 15 leaves reel 12 during acceleration or deceleration of the web, certain fluttering may occur. The controller 16 removes the flutter from the web, so that a reliable recording platform is maintained at transducing station 14. Variations in web 15 transport behaviour as it leaves reel 12 are accommodated in controller 16 so that as the web 15 leaves controller 16 the longitudinal edges of the web 15 are in line and the web equalized in tension. Accordingly, it is desirable to place controller 16 relatively close to the removable cartridge 11 so that web transport is consistent over a great a portion of the transport path as possible.

The relatively shallow vacuum chamber 63 and the bypass groove 62 provide effective decoupling of the transducing station 14 from web transport perturbations that may occur as web 15 leaves removable supply reel 12.

## Claims

1. Reel-to-reel web handling apparatus having tension control means (19, 20, 21) tending to maintain a uniform tension in a web (15) extending and transportable between two reels (12, 13), means (21, 30, 32) to change the speed of web transport between reels which may introduce perturbations in the tension, a work station (14) disposed between the two reels, at which work is performable on the web, web bight forming means (63) disposed between the work station (14) and one of the reels (12) for receiving the web to form a bight therein, and bight regulation means (62) in the bight forming means (63) to maintain a relatively constant bight during web stoppage and motions irrespective of modest tension changes, said bight forming means having an air evacuated chamber (63) including a pair of spaced and facing sidewalls (56, 57) having a spacing substantially equal to the width of said web (15) whereby as said web enters said chamber (63) a substantial air sealing relationship is established, said bight regulation means (62) being in said chamber (63) and including an elongated slot (62) in one of said sidewalls (57), characterized in that said slot (62) extends in the direction of web motion and has a shoulder (73) adjacent the outer portion (61) of the chamber (63) extending in the direction of web motion and crosswise of the bight of web for allowing air to flow past said web (15) through said slot (62) into said chamber (63) so that the bight of said web (15) in said chamber (63) tends to stabilize adjacent said upper shoulder (73) whereby the length of the web between said work station (14) and said one reel (12) is relatively constant.

2. Apparatus according to claim 1, characterized by air exhaust means (64, 41, 37) in fluid communication with the chamber (63) to exhaust air therefrom.

3. Apparatus according to claim 2, characterized in that the air-exhaust means (64, 41, 37) exhausts sufficient air to provide a force on the web in the chamber (63) exceeding the effect of uniform tension thereon, whereby the web (15) is drawn into the chamber (63) in a bight.

4. Apparatus according to claim 3, characterized in that the chamber (63) is disposed between airbearing web-supporting means (51, 75).

## Patentansprüche

1. Vorrichtung zur Handhabung eines von Spule zu Spule laufenden Bandes, mit Spannungsregelungsmitteln (19, 20, 21), welche eine gleichmäßige Spannung eines Bandes (15) aufrechtzuerhalten trachten, welches sich zwischen zwei Spulen (12, 13) erstreckt und transportierbar ist, Mitteln (21, 30, 32) zur Änderung der Geschwindigkeit des Bandtransports zwischen den Spulen, welche Störungen der Spannung einbringen können, einer zwischen den beiden Spulen angeordneten Arbeitsstation (14), an welcher eine Arbeit auf dem Band durchgeführt werden kann, Bandbuchtbildungsmitteln (63), welche zwischen der Arbeitsstation (14) und einer der Spulen (12) angeordnet sind, zur Aufnahme des Bandes zur Ausbildung einer Bucht in diesem, und Buchtreguliermitteln (62) in den Buchtausbildungsmitteln (63) zur Aufrechterhaltung einer verhältnismäßig konstanten Bucht während des Bandanhaltens und der Bandbewegungen unabhängig von mäßigen Spannungsänderungen, wobei die Buchtausbildungsmittel eine luftevakuierte Kammer (63) mit einem Paar von im Abstand und einander gegenüberliegenden Seitenwänden (56, 57), deren Abstand im wesentlichen gleich der Breite des Bandes (15) ist, aufweisen, wodurch mit Eintreten des Bandes in die Kammer (63) eine im wesentlichen luftabschließende Beziehung hergestellt wird, wobei die Buchtreguliermittel (62) sich in der Kammer (63) befinden und einen langgestreckten Schlitz (62) in einer der Seitenwände (57) enthalten, dadurch gekennzeichnet, daß sich der Schlitz (62) in Richtung der Bandbewegung erstreckt und benachbart zum äußeren Abschnitt (61) der Kammer (63) eine Schulter (73) aufweist, welche sich in Richtung der Bandbewegung und quer über die Bandbucht erstreckt und so gestattet, daß Luft am Band (15) vorbei durch den Schlitz (62) in die Kammer (63) strömt, so daß die Bucht des Bandes (15) in der Kammer (63) sich benachbart zu der oberen Schulter (73) zu stabilisieren strebt, wodurch die Länge des Bandes zwischen der Arbeitsstation (14) und der einen Spule (12) verhältnismäßig konstant ist.

2. Vorrichtung nach Anspruch 1, gekennzeichnet durch mit der Kammer (63) in Fluidverbindung stehende Luftabsaugmittel (64, 41, 37) zum Absaugen von Luft aus jener.

3. Vorrichtung nach Anspruch 2, dadurch gekennzeichnet, daß die Luftabsaugmittel (64, 41, 37) ausreichend Luft dafür absaugen, daß eine Kraft auf das Band in der Kammer (63) geschaffen wird, welche die Wirkung der gleichförmigen Spannung auf dieses übersteigt, wodurch das Band (15) in einer Bucht in die Kammer (63) gezogen wird.

4. Vorrichtung nach Anspruch 3, dadurch gekennzeichnet, daß die Kammer (63) zwischen luftlagernden Bandabstützmitteln (51, 75) angeordnet ist.

## Revendications

1. Appareil pour manipuler une bande continue circulant d'une bobine à une autre, comprenant des moyens (19, 20, 21) de commande de tension qui tendent à maintenir une tension uniforme dans une bande continue (15) s'étendant et transportable entre deux bobines (12, 13), des moyens (21, 30, 32) permettant de modifier la vitesse de déplacement de la bande entre des bobines qui peuvent introduire des perturbations dans la tension, un poste de travail (14), disposé entre les deux bobines et dans lequel un travail peut être exécuté sur la bande continue, des moyens (63) de formation d'une boucle de la bande continue disposés entre le poste de travail (14) et l'une des bobines (12) de manière à recevoir la bande continue afin d'y former une boucle, et des moyens (62) de réglage de la boucle, situés dans les moyens (63) de formation de la boucle de manière à maintenir une boucle relativement constante pendant l'arrêt et les déplacements de la bande continue, indépendamment de variations très faibles de tension, lesdits moyens de formation de la boucle comportant une chambre (63) dans laquelle le vide est établi et qui possède un couple de parois latérales (56, 57) espacées et en vis-à-vis, situées à un écartement essentiellement égal à la largeur de ladite bande continue (15), ce qui a pour effet que lorsque la bande pénètre dans ladite chambre (63), une relation d'étanchéité substantielle à l'air est établie, lesdits moyens (60) de régulation de la boucle étant situés dans ladite chambre (63) et comprenant une fente allongée (62) située dans l'une desdites parois latérales (57), caractérisé en ce que ladite fente (62) s'étend suivant la direction de déplacement de la bande continue et comporte un épaulement (73) situé au voisinage de la partie extérieure (61) de la chambre (63) et s'étendant suivant la direction du déplacement de la bande et transversalement par rapport à la boucle de la bande continue de manière à permettre à l'air de pénétrer par ladite fente (62) dans ladite chambre (63) en circulant au-delà de ladite bande continue (15) de telle sorte que la boucle formée par la bande continue (15) dans ladite chambre (63) tend à se stabiliser au voisinage dudit épaulement supérieur (73), ce qui a pour effet que la longueur de la bande continue entre ledit poste de travail (14) et l'une dite des bobines (12) est relativement constante.

2. Appareil selon la revendication 1, caractérisé par des moyens (64, 41, 37) d'évacuation d'air qui sont en communication fluidique avec la chambre (63) de manière à en évacuer de l'air.

3. Apareil selon la revendication 2, caractérisé en ce que les moyens (64, 41, 37) d'évacuation d'air évacuent une quantité suffisante d'air pour appliquer à la bande continue, dans la chambre (63), une force surmontant l'effet de la tension uniforme appliquée à la bande, ce qui a pour effet que la bande continue (15) est entraînée à l'intérieur de la chambre (63) en formant une boucle.

4. Appareil selon la revendication 3, caractérisé en ce que la chambre (63) est disposée entre des moyens (51, 75) de support de la bande continue, formant coussin d'air.

FIG-1

FIG-2

$\underline{IV}$

41

16

40

54

53 · 64 · 63 · 76 · 77

15 · 51 · 62 · 61 · 75

$\underline{IV}$

$\mathcal{F}_{IG}$-3

41

54

16

64

62 · 63

72 · 73

70

71 · 15

57 · 56

61

$\mathcal{F}_{IG}$-4